# EUROPÄISCHE PATENTSCHRIFT

(11) **EP 3 419 810 B1**
(45) Veröffentlichungstag und Bekanntmachung des Hinweises auf die Patenterteilung: **23.11.2022**
(21) Anmeldenummer: 17712813.9
(22) Anmeldetag: 21.02.2017
(51) Int. Cl.: B29C 65/08, B65B 13/32, B29C 65/74, B29K 23/00, B29K 67/00

(54) **UMREIFUNGSVORRICHTUNG MIT EINER ULTRASCHALLSCHWEISSEINRICHTUNG**
STRAPPING DEVICE WITH AN ULTRASONIC WELDING DEVICE
DISPOSITIF DE CERCLAGE COMPORTANT UN DISPOSITIF DE SOUDAGE PAR ULTRASONS

(30) Priorität: 22.02.2016 CH 2312016
(43) Veröffentlichungstag der Anmeldung: 02.01.2019
(73) Patentinhaber: Signode Industrial Group LLC, Glenview, IL 60026 (US)
(72) Erfinder: TAKIDIS, Dimitrios, 8600 Zürich (CH); HURNI, Hansjörg, 8046 Zürich (CH)
(74) Vertreter: Bardehle Pagenberg Partnerschaft mbB Patentanwälte Rechtsanwälte
(86) Internationale Anmeldenummer: PCT/IB2017/000139
(87) Internationale Veröffentlichungsnummer: WO 2017/144967

(56) Entgegenhaltungen:
- EP-A2- 0 095 784
- DE-A1- 3 911 634

## Beschreibung

Die Erfindung betrifft eine Umreifungsvorrichtung zur Umreifung von Packgut mit einem Umreifungsband, die mit einer als Ultraschallschweisseinrichtung ausgebildeten Verbindungseinrichtung zur Bildung eines Verschlusses am Umreifungsband versehen ist, wobei die Ultraschallschweisseinrichtung mit einer Sonotrodeneinrichtung versehen ist, auf die durch einen Ultraschallgenerator erzeugter Ultraschall übertragbar ist und die Sonotrodeneinrichtung in einem vorgesehenen Kontaktbereich mit dem Umreifungsband eine Kontaktfläche aufweist, wobei die Kontaktfläche zur Anlage gegen eine Oberfläche des Umreifungsbands und die Sonotrodeneinrichtung zur Ausführung von Ultraschallschwingungen mit ihrer Kontaktfläche vorgesehen ist.

Derartige Umreifungsvorrichtungen werden zur Umreifung von Packgut mit einem Kunststoffband eingesetzt. Dazu wird um das Packgut eine Schlaufe des jeweiligen Kunststoffbandes gelegt. In der Regel wird das Kunststoffband hierbei von einer Vorratsrolle abgezogen. Nachdem die Schlaufe um das Packgut vollständig gelegt ist, überlappt der Endbereich des Bandes mit einem Abschnitt der Bandschlaufe. An diesen zweilagigen Bereich des Bandes in der Umreifungsvorrichtung wird nun das Band in der Umreifungsvorrichtung geklemmt, mittels der Spanneinrichtung auf die Bandschlaufe eine Bandspannung aufgebracht und beispielsweise durch Reibschweissung an der Schlaufe zwischen den beiden Bandlagen ein Verschluss erzeugt. Hierbei wird mit einem sich oszillierend bewegenden Reibschuh im Bereich zweier Enden der Bandschlaufe auf das Band gedrückt. Der Druck und die durch die Bewegung entstehende Wärme schmilzt das in der Regel Kunststoff aufweisende Band lokal für kurze Zeit auf. Hierdurch entsteht zwischen den beiden Bandlagen eine dauerhafte und höchstens mit grosser Kraft wieder zu lösende Verbindung zwischen den beiden Bandlagen. Danach oder in etwa gleichzeitig wird die Schlaufe von der Vorratsrolle abgetrennt. Das jeweilige Packgut ist hierdurch umreift. Dieser Umreifungsvorgang kann sowohl mit stationären Umreifungsautomaten als auch mit tragbaren Umreifungsvorrichtungen erfolgen.

Zur Erzeugung der Verbindung werden auch bereits Ultraschallschweisseinrichtungen eingesetzt. Mit diesen wird Ultraschall mit vorbestimmter Frequenz und Amplitude erzeugt, der mittels einer gegen das Band anliegenden Kontaktfläche der Ultraschallsonotrode einen zweilagigen Bandabschnitt eingebracht wird. Die eben und flächig auf einer Bandoberfläche anliegende Kontaktfläche der Ultraschallsonotrode ist hierbei senkrecht zur Längsachse der Sonotrode und der Schwingungsrichtung des Konverters ausgerichtet, wodurch der höchste Wirkungsgrad in Bezug auf die Übertragung der Schwingungsenergie in das Umreifungsband erreicht werden soll. Dort führt die Ultraschallbeaufschlagung zu einer Erwärmung und einem Aufschmelzen der beiden aufeinander liegenden Bandlagen. Die lokal aufgeschmolzenen Bandbereiche der beiden Bandlagen fliessen ineinander. Nach einer Abkühlung sind ähnlich wie beim Reibschweissen die beiden Bandlagen stoffschlüssig miteinander verbunden und hierdurch die Bandschlaufe dauerhaft geschlossen. An bestehenden, auf Ultraschallenergie basierenden Schweisseinrichtungen kann als nachteilig gesehen werden, dass diese vergleichsweise voluminös bauen und deshalb einen grossen Bauraum benötigen. Andere Komponenten der Umreifungsvorrichtung, insbesondere der Verschlusseinrichtung, müssen deshalb der Ultraschallsonotrode sowie dem Ultraschallkonverter weichen und an anderer Stelle der Umreifungsvorrichtung angeordnet werden. Dadurch wird der Aufbau derartiger Umreifungsvorrichtungen verkompliziert.

DE 39 11 634 A1 offenbart ein Ultraschall-Schweißsystem zum Überlappungsschweißen von Kunststoff-Bändern, wobei der verwendete Longitudinal-Wandler an der vorderen Stirnfläche einseitig abgeschrägt ist.

EP o 095 784 A2 offenbart eine Vorrichtung und ein Verfahren zum Befestigen eines thermoplastischen Bandes um eine Packung durch Zusammenpressen der überlappenden Bandendabschnitte und Bewegen eines der überlappenden Endabschnitte in Querrichtung relativ zu dem anderen mit sehr hoher Frequenz und kleiner Amplitude, um die Grenzflächenbereiche zu schmelzen und dazwischen zu verschweißen. Der zur Erzeugung der Ultraschallschwingungen verwendete Wandler wird nur an seinem Knotenpunkt getragen, an dem er schwingungsfrei ist.

Der Erfindung liegt deshalb die Aufgabe zugrunde, eine kompaktere Bauform von Umreifungsvorrichtungen der eingangs genannten Art zu ermöglichen.

Diese Aufgabe wird durch die Vorrichtung und das Verfahren mit den in den Ansprüchen 1 und 11 aufgeführten Merkmalen gelöst.

Es hat sich gezeigt, dass mit einer auf den ersten Blick überraschend einfach erscheinenden Massnahme, nämlich durch eine Schrägstellung der sich aus der Schwingungsrichtung des vom Konverter der Sonotrodeneinrichtung erzeugten Ultraschalls in der Sonotrode ergebenden Längsachse in Bezug auf die Kontaktfläche eine kompaktere Bauform erreicht werden kann, ohne dass hierdurch die Funktionsfähigkeit der Ultraschallschweisseinrichtung in relevanter Weise beeinträchtigt wird. Wider Erwarten ist hierdurch der Verschlussbildungsprozess nicht beeinträchtigt, obwohl die Längsachse der Sonotrode hierbei nicht nach der vorherrschenden Lehre senkrecht zur Oberfläche ausgerichtet ist, gegen die sie anliegt und in die Ultraschall zur Erzeugung eines Verschlusses zwischen mehreren Bandlangen eingebracht wird. Entgegen den vorherrschenden Vermutungen wird die Erzielung des angestrebten Arbeitsergebnisses, nämlich der Bildung eines Verschlusses zwischen zwei übereinander angeordneter und gegeneinander anliegenden Bandlagen des Umreifungsbandes nicht funktionsrelevant beeinträchtigt. Im Gegenteil, wie es sich im Rahmen der vorliegenden Erfindung gezeigt hat, erfolgt der Prozess zur Verschlussbildung und dem hierzu erforderlichen Energieeintrag in das Umreifungsband mit guten Arbeitsergebnissen. Es kann vermutet werden, dass durch die erfindungsgemässe Schrägstellung der Sonotrode zwar ein entsprechend der Grösse des Neigungswinkels geringerer Anteil an Ultraschallenergie für die Verbindungserzeugung zur Verfügung steht, dies aber womöglich dadurch kompensiert wird, dass ein Anteil der Ultraschallschwingungen, der im wesentlichen parallel zur Kontaktfläche ausgerichtet ist, in Art eines Vibrations- oder Reibschweissvorgangs zusätzlich zum Ultraschallschweissvorgang zur Erhitzung und zum Aufschmelzen des Kunststoffs des Umreifungsbands beiträgt. Diese Zusammenhänge als zutreffened voraussgesetzt, ist der Anteil der longitudinalen Ultraschallschwingung, die parallel zur Kontaktfläche ausgerichtet ist, für die Verschlussbildung nicht verloren, sondern trägt entgegen der vorherrschenden Lehrmeinung auch einen Anteil zum lokalen Aufschmelzen der gegeneinander anliegenden Oberflächen der Bandlagen des Umreifungsbands bei.

Im Zusammenhang mit der vorliegenden Erfindung ist es bevorzugt, dass der von der Kontaktfläche und einer Längsachse der Sonotrode eingeschlossene Winkel α kleiner als 90°, aber zumindest 5°, vorzugsweise zumindest 10° und besonders bevorzugt 15° beträgt. Besonders bevorzugt ist es hierbei, dass der Winkel α kleiner oder gleich 80° vorzugsweise kleiner oder gleich 70° beträgt. Ein besonders geeigneter konkreter Winkel α kann beispielsiweise 30° betragen.

Im Bereich der Wirkstelle, an der eine Umreifungsvorrichtung auf das Band im Zusammenhang mit dem Spannvorgang, dem Verschluss- sowie dem Trennvorgang einwirkt, sind auf engstem Raum eine Vielzahl von Komponenten angeordnet. Hinsichtlich der anzuordnenden Komponenten steht ein vergleichsweise geringer Bauraum zur Verfügung, es herrscht Platzmangel und die Anordnung von Komponenten auf der gleichen Seite der Bandoberfläche wie die Sonotrode ist mit Komplikationen und technischem Aufwand verbunden. Mit der vorliegenden Erfindung ist nun möglich, die Sonotrodeneinrichtung schräg in Bezug auf die Bandoberflächen anzuordnen, so dass lediglich die Kontaktfläche sich im Wirkungsbereich befindet und die Sonotrode schräg von der Bandoberfläche absteht. Im Vergleich mit vorbekannten Umreifungsvorrichtungen kann hierdurch die Verschlusseinrichtung besonders kompakt gestaltet und Platz auf der Seite des Bereichs der Wirkstelle der Kontaktfläche der Sonotrodeneinrichtung zur Verfügung gestellt werden.

Die erfindungsgemässe schräge Ausrichtung der Kontaktfläche der Sonotrode in Bezug auf ihre eigene Längsachse kann in vorteilhafter und besonders bevorzugter Weise auch dazu vorgesehen sein, dass mehrere, insbesondere zwei und nur zwei, Kontaktflächen an einer Sonotrodeneinrichtung ausgebildet sein können. Da derartige Kontaktflächen von Sonotrodeneinrichtungen durch ihren Einsatz beim Ultraschallschweissen Verschleiss unterliegen, kann durch die mindestens zwei an einer Sonotrodeneinrichtung ausgebildeten Kontaktflächen die Lebensdauer einer Sonotrodeneinrichtung bzw. der Sonotrode um einen Faktor, der der Anzahl der Kontaktflächen an einer Sonotrodeneinrichtung entspricht, verlängert werden. Durch diese bevorzugte erfindungsgemässe Ausführungsform kann die Lebensdauer einer erfindungsgemässen Sonotrode somit zumindest um den Faktor 2 verlängert und damit Kosten für verschliessene Sonotroden in etwa halbiert werden.

Es ist hierbei bevorzugt, dass die Längsachse der Sonotrode, entlang der sich die vom Ultraschallkonverter erzeugten - vorzugsweise als Longitudinalwellen ausgebildeten - Ultraschallschwingungen ausbreiten, nicht das Zentrum, also nicht den Bereich einer Mitte der sich in der Einsatzposition befindenden Kontaktfläche der Sonotrode schneidet, wie dies bisher üblicherweise der Fall war. Gleichwohl umfasst die vorliegende Erfindung auch Ausführungsformen, bei denen die Längsachse die Fläche der Kontaktfläche mit Abstand zu allen Rändern der Kontaktfläche unter einem von 90° abweichenden Winkel schneidet, insbesondere in einem mittigen Bereich der Kontaktfläche. Um zwei Kontaktflächen an einer Sonotrode, die nacheinander und unabhängig voneinander zum Einsatz kommen können, besonders einfach zu realisieren und mit wenig Aufwand lage- und positionsgerecht in ihre jeweilige Einsatzposition zu bringen, kann es von Vorteil sein, dass die beiden Kontaktflächen nicht-parallel zueinander angeordnet sind und die Längsachse entweder ohne Kontakt mit den beiden Kontaktflächen zwischen den beiden Kontaktflächen verläuft oder aber die beiden Kontaktflächen an einer gemeinsamen Längskante zusammenstossen, welche von der Längsachse geschnitten wird.

Zur Ausbildung von zwei Kontaktflächen an einer Sonotrode, die zeitlich nacheinander in der Umreifungsvorrichtung in ihre Einsatzposition gebracht werden können, kann es ebenfalls von Vorteil sein, wenn die beiden Kontaktflächen zumindest in Bezug auf ihre Lage hinsichtlich der Längsachse symmetrisch angeordnet sind. Besonders bevorzugt ist hierbei, dass die zumindest zwei Kontaktflächen zumindest im wesentlichen die gleiche Grösse und die gleiche geometrische Form aufweisen. Des weiteren können die beiden Kontaktflächen auf unterschiedlichen, sich gegenüberliegenden, Seiten der Längsachse angeordnet sein und jeweils um den Winkelbetrag α gegenüber der Längsachse geneigt sein. Hierdurch ergibt sich eine zumindest in etwa konische Anordnung der beiden Kontaktflächen, wobei die beiden Kontaktflächen selbst vorzugsweise den doppelten Winkel α miteinander einschliessen. Auch in diesem Zusammenhang soll unter dem Winkel α der Winkel verstanden werden, unter dem eine oder jede der Kontaktflächen gegenüber der Längsachse geneigt angeordnet sind.

Der Austausch von einer Kontaktfläche, die sich in der Sonotrodeneinrichtung der Umreifungsvorrchtung in einer Einsatzposition befindet, durch eine andere Kontaktfläche derselben Sonotrode bzw. Sonotrodeneinrichtung, die anstelle der ersten Kontaktfläche in die Einsatzposition gebracht werden soll, kann in einer vorteilhaften erfindungsgemässen Ausführungsform durch eine Änderung der relativen Position der Sonotrode und/oder ihrer Ausrichtung in Bezug auf ihre vorausgegangene Einsatzposition innerhalb der Umreifungsvorrichtung vorgenommen werden. Bevorzugt ist hierbei eine erfindungsgemässe Ausführungsform, bei der hiefür mit der Sonotrode eine Drehbewegung ausgeführt wird. Besonders bevorzugt ist hierbei eine Rotationsbewegung um die Längsachse der Sonotrode. Eine besonders hohe Positioniergenauigkeit der Sonotrode lässt sich dabei auf einfache Weise erreichen, wenn ausgehend von einer Anordnung der ersten Kontaktfläche in deren Einsatzposition, zur Überführung der zweiten Kontaktfläche in ihre Arbeitsposition ausschließlich die Dreh- bzw. Rotationsbewegung der Sonotrode oder ihres Halters erforderlich ist. Die Grösse der Rotationsbewegung kann hierbei der Grösse des Versatzes entsprechen, mit dem die zweite Kontaktfläche gegenüber der ersten Kontaktfläche am Umfang der Sonotrode versetzt angeordnet ist. Bei einer solchen Sonotrodeneinrichtung kann mit besonders wenig Aufwand und besonders schnell die zumindest eine weitere Kontaktfläche in die Einsatzposition an der Sonotrodeneinrichtung angebracht werden. Nachdem die erste Kontaktfläche beispielsweise aufgrund eingetretenen Verschleisses ihr Standzeitende erreicht hat, können durch den schnellen Wechsel zu der in die Sonotrode integrierten zweiten Kontaktfläche unproduktive Nebenzeiten einer Umreifungsvorrichtung reduziert werden. Hierzu kann auch eine weitere besonders zweckmässige Ausführungsform beitragen, bei der sich die Sonotrode nur in den für die Kontaktflächen vorgesehenen Rotationspositionen relativ zum Ultraschallgenerator anordnen lässt. Dies kann beispielsweise durch eine formschlüssige Anordnung der Sonotrode an der Sonotrodenaufnahme erfolgen, die bei solchen erfindungsgemässen Ausführungsformen nur bei rotationspositionskorrekter Anordnung der Sonotrode erreichbar sein sollte. Hierbei kann in einer bevorzugten Ausführungsform der Erfindung zumindest in Bezug auf ein Längsachse der Sonotrode und auf Rotationsbewegungen um diese Längsachse bzw. in Bezug auf eine rotationsfeste Anordnung der Sonotrode, die formschlüssige, aber wieder lösbare, Anordnung der Sonotrode vorliegen. In der gleichen oder in anderen bevorzugten Ausführungsformen der Erfindung kann die Sonotrode in Bezug auf ihre Längsachse in axialer Richtung kraftschlüssig bewegungsfest, aber lösbar, angeordnet sein.

In einer weiteren zweckmässigen Ausführungsform der vorliegenden Erfindung, kann die zumindest eine Kontaktfläche der Sonotrode mit einer Krümmung versehen sein. Die Krümmung kann mit Vorteil derart ausgerichtet sein, dass sie in der Einsatzposition der Kontaktfläche zumindest im wesentlichen in Richtung der oder parallel zur vorgesehenen Längsrichtung des Bandabschnitts des Umreifungsbands verläuft. Des Weiteren kann sich die Krümmung mit Vorteil über einen Teil oder die gesamte Länge der Kontaktfläche in Längsrichtung des Umreifungsbands erstrecken. Schliesslich kann es auch zweckmässig sein, dass eine Krümmung mit konstantem Radius vorgesehen ist. Die Grösse der Krümmung, insbesondere eines Radius, sollte hierbei derart bemessen sein, dass eine Eindringtiefe einer Verzahnung der Kontaktfläche - ausgehend von zumindest einer Stelle mit einer maximalen Eindringtefe - in Krümmungsrichtung zu einer abnehmenden Eindringtiefe der Verzahnung führt, vorzugsweise zu einer kontinuierlich abnehmenden Eindringtiefe. Durch diese Massnahmen können Spannungsspitzen des auf Zug belasteten Bands reduziert, sowie - trotz hoher Belastung des Bands bei der Verschlussbildung - Beschädigungen des Bands vermieden, eine homogene Verschweissung und damit die Bildung von zuverlässig belastbaren Verschlüssen erreicht werden.

Die Sonotrode der Ultraschallschweisseinrichtung kann zur Erzeugung eines Verschlusses am Umreifungsband von einer Ruheposition in eine Verschlussbildungspostion und nach erfolgter Verschlussbildung in umgekehrter Richtung wieder zurück in die Ruheposition überführt werden. Hierdurch kann die Kontaktfläche von einem grösseren Abstand zum Gegenhalter, den sie in der Ruheposition hat, zu einem geringerem Abstand zum Gegenhalter in die Verschlussbildungsposition überführt werden, in der sie für einen Kontakt mit dem Umreifungsband vorgesehen ist. Zumindest die Überführungsbewegung in die Verschlussbildungsposition, vorzugsweise auch die Rückstellbewegung, kann eine motorisch angetriebene Bewegung sein. Während der Überführungsbewegung der Sonotrode kann auch ein Trennelement einer Trenneinrichtung in seine Trennposition überführt werden, in der es zum Durchtrennen des Umreifungsbands vorgesehen ist. Hierbei wird die bereits erzeugte Bandschlinge von einem Bandvorrat abgetrennt. Eine kompakte Bauform lässt sich mit Vorteil dadurch erzielen, dass das Trennelement zumindest mittelbar derart an der Ultraschalleinrichtung angeordnet ist, dass das Trennelement bei der Bewegung der Ultraschalleinrichtung in seine Trennposition mitgenommen wird. Mit dieser Ausführungsform ist es möglich, mit geringem Aufwand auch die Trenneinrichtung aus dem unmittelbaren Wirkbereich am Band dann zu entfernen, wenn die Trenneinrichtung nicht im Einsatz ist. In diesen Zeiten gibt somit die Trenneinrichtung Platz im Wirkbereich am Umreifungsband für andere Komponenten der Umreifungsvorrichtung frei. Dies trägt ebenso zu einer kompakten Bauform der Umreifungsvorrichtung bei, wie die vorzugsweise vorgesehene gemeinsame Antriebsbewegung für die Ultraschallschweissvorrichtung und die Trenneinrichtung zu deren Überführungsbewegung zum Umreifungsband hin und von ihm weg. In anderen Ausführungsformen der Erfindung kann die Trenneinrichtung mit seinem zumindest einen Trennelement auch an einer anderen Position als an der Ultraschalleinrichtung angebracht und möglicherweise auch separat von ihr bewegt sein.

In einer weiteren bevorzugten Ausführungsform kann die Trenneinrichtung zusätzlich zur gemeinsamen Überführungsbewegung auch eine Relativbewegung gegenüber der Ultraschallschweisseinrichtung ausführen. Diese Bewegung wird vorzugsweise als Trennbewegung genutzt, mit der ein Trennelement der Trenneinrichtung das Band vom Bandvorrat abtrennt. Die Trennbewegung kann zweckmässigerweise erzeugt werden, nachdem das Trennelement in seine Trennposition überführt ist. Es hat sich ebenfalls als günstig erwiesen, wenn zur Erzeugung der Trennbewegung der gleiche Übertragungsweg vom einem gemeinsamem Antriebsmotor genutzt wird, mit dem auch die Überführungsbewegung auf die Trenneinrichtung übertragen wird. In einer bevorzugten Ausführungsform kann hierfür ein gemeinsamer Antriebsmotor und ein gemeinsamer Steuerungsnocken eines Nockenwellenantriebs, insbesondere gleichzeitig, verwendet werden.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine erfindungsgemässe Umreifungsvorrichtung, die mit einer erfindungsgemässen Ultraschallschweissvorrichtung versehen ist;
- Fig. 2: eine Komponente der Umreifungsvorrichtung aus Fig. 1 mit der erfindungsgemässen Ultraschallschweissvorrichtung;
- Fig. 3: eine in eine Baugruppe der Umreifungsvorrichtung eingebaute erfindungsgemässe Sonotrodeneinrichtung in einer perspektivischen Darstellung mit einem Ultraschallkonverter und einer daran angebrachten Sonotrode;
- Fig. 4: eine separate Darstellung der Sonotrodeneinrichtung aus Fig. 3;
- Fig. 5: die Sonotrode der Sonotrodeneinrichtung aus Fig. 4 in einer Seitenansicht;
- Fig. 6: die Sonotrode aus Fig. 4 in einer Vorderansicht;
- Fig. 7: die Baugruppe mit der Sonotrodeneinrichtung in einer offenen Position, die sie bei Nichteinsatz einnimmt;
- Fig. 8: die Sonotrodeneinrichtung aus Fig. 7 in einer geschlossenen Position, die sie bei einem Einsatz zur Verschlussbildung einnimmt;
- Fig. 9: eine Teildarstellung eines Längsschnitts durch die Verschlusseinrchitung mit der Sonotrode;
- Fig. 10: eine Schnittdarstellung durch die Verschlusseinrichtung längs einer Steuerungswelle.

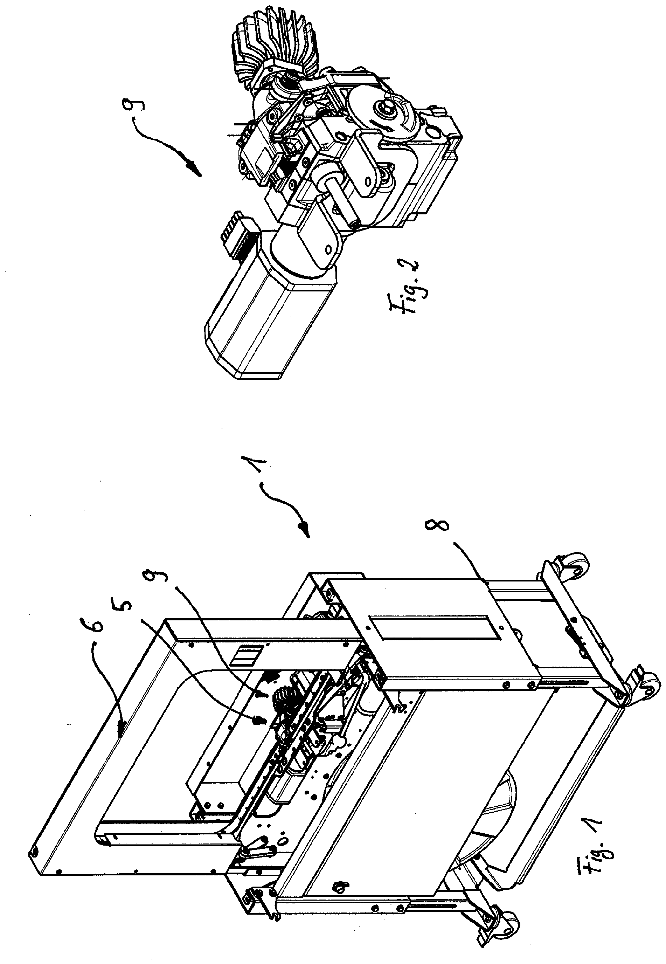

In Fig. 1 ist eine Umreifungsvorrichtung 1 gezeigt, die mit einer Steuerung, einer Vorratseinrichtung 3 zur Bevorratung und zum Verfügungsstellen eines Umreifungsbandes, sowie mit einer Spann- und Verschlusseinrichtung 5 (Verbindungseinrichtung) versehen ist. Als Umreifungsbänder sind Kunststoffumreifungsbänder vorgesehen, die als Werkstoffe insbesondere Polypropylen (PP) oder Polyethylenterephthalat (PET) aufweisen können. Die Spann- und Verschlusseinrichtung 5 dient unter anderem zur Erzeugung einer Vorschubsowie zur Erzeugung einer Rückzugsbewegung des Umreifungsbandes. Die Spanneinrichtung dient ausserdem zur Aufbringung einer Bandspannung auf eine Bandschlaufe und die Verschlusseinrichtung zur Erzeugung eines Verschlusses am Umreifungsband. Zudem weist die Umreifungsvorrichtung eine Bandführung 6 auf, mit der das Band maschinell und automatisch auf einem vorgegebenen Weg schlaufenartig um ein in der Darstellung von Fig. 1 nicht gezeigtem Packgut gelegt werden kann. Das Packgut wird hierzu auf einer horizontal ausgerichteten und in Fig. 1 ebenfalls nicht gezeigten Tischplatte der Umreifungsvorrichtung in der Weise angeordnet, dass die Bandführung das Packgut umgibt. Ein unterer horizontal verlaufender Schenkel der Bandführung 6 verläuft im Ausführungsbeispiel im Bereich der Tischplatte unterhalb des Packguts. In der Spann- und Verschlusseinrichtung 5 ist zudem eine Schweiss- und Klemmeinheit 16 für das Band integriert, mit der das Band geklemmt und zwischen zwei Bandlagen ein Verschluss erzeugbar ist. Bis auf die nachfolgend erörterten Unterschiede zu vorbekannten Spann- und Verschlusseinrichtungen, handelt es sich bei diesem Ausführungsbeispiel einer erfindungsgemäßen Spann- und Verschlusseinrichtung 5 um an sich bekannte Komponenten von Umreifungsvorrichtungen.

Die zusammen mit der Bandführung 6 auf einem Gestell 8 angeordnete und in Fig. 2 separat und teilweise dargestellte Spann- und Verschlusseinrichtung 5 weist eine ebenfalls an sich bekannte und in den Figuren nicht näher dargestellte Bandantriebseinrichtung auf. Diese kann insbesondere mit einem oder mehreren Rollenpaaren sowie eventuell mit weiteren einzelnen Umlenkrollen versehen sein. Das Band wird zwischen Rollenpaaren der Rollen angeordnet und durch Antrieb von zumindest einer Rolle mit einer Vorschub-, Rückzugs- oder Spannbewegung beaufschlagt. Mit der Vorschubbewegung wird das Band mit hoher Geschwindigkeit durch die in sich geschlossene Bandführung 6 geschoben, so dass das Band am Ende der Vorschubbewegung eine Bandschlaufe bildet und im Bereich des Bandendes zweilagig angeordnet ist. Nachdem das Bandende mittels einer wiederum nicht dargestellten Bandklemme geklemmt worden ist, wird das Band der Bandschlaufe mittels Rollen der Spann- und Verschlusseinrichtung in eine der Vorschubrichtung entgegen gesetzten Richtung zurückgezogen. Das Band gelangt hierdurch aus dem Kanal der Bandführung 6 heraus und legt sich gegen das in der Umreifungsvorrichtung 1 angeordnete Packgut an. Der Kanal kann hierfür beispielsweise mit beweglichen Klappen versehen sein, durch die der Bandkanal geöffnet werden kann. Danach wird das anliegende Band durch eine weitere von Rollen aufgebrachte Rückzugsbewegung mit einer vergrösserten Bandspannung versehen, wodurch das Band straff am Packgut anliegt. Derartige Vorgänge sind vom Grundsatz her in vielfacher und verschiedener Weise aus dem Stand der Technik bekannt, weshalb hierauf nicht näher eingegangen wird.

In den Fig. 2 bis 10 ist die Verschlusseinrichtung oder Teile davon dargestellt, die zur Erzeugung eines Verschlusses zwischen zwei Bandlagen des Umreifungsbands eine Ultraschallschweisseinrichtung 9 aufweist. Letztere ist mit einem Ultraschallkonverter 10 versehen, der zur Ausführung von Schwingungen mit Frequenzen im Ultraschallbereich, nämlich von 20 kHz bis 100 kHz vorgesehen ist. Bevorzugt sind hierbei insbesondere Frequenzen aus einem Bereich von 20 kHz bis 40 kHz. Im Ausführungsbeispiel kann der Ultraschallkonverter besonders bevorzugt mit einer Frequenz aus einem Bereich von 32kHz bis 38 kHz, insbesondere mit einer Frequenz von 35 kHz betrieben werden. Im Zusammenhang mit der vorliegenden Erfindung kann der Ultraschallkonverter 10 ein an sich aus dem Stand der Technik bekannter und für die Erzeugung von Schweissverbindungen an Kunststoffbändern geeigneter Ultraschallkonverter sein, weshalb auf diesen nachfolgend ebenso nicht näher eingegangen wird. Gleiches gilt für die Elektronikeinrichtung, mit welcher der Ultraschallkonverter 10 betrieben wird. An den Ultraschallkonverter 10 kann eine Sonotrodeneinrichtung 13 angeschlossen sein, auf die der Ultraschallkonverter 10 die von ihm erzeugten Schwingungen überträgt. Anders als dies im dargestellten Ausführungsbeispiel der Fall ist, kann in anderen erfindungsgemässen Ausführungsbeispielen zwischen dem Ultraschallkonverter 10 und der Sonotrode 11 ein Booster vorgesehen sein, mit dem sich die Größe der Amplitude der Ultraschallschwingung verändern lässt, insbesondere vergrössert werden kann. Bei einem Booster handelt es sich somit um einen Schall-Amplitudentransformator zur Veränderung der Schwingungsamplitude der Ultraschallschwingung. Der Ultraschallkonverter 10 und die Sonotrode 11, sowie der zwischengeschaltete Booster, falls vorhanden, sind üblicherweise im wesentlichen hintereinander und entlang einer Längsachse 12 angeordnet, die der Schwingungsrichtung und/oder Ausbreitungsrichtung der Ultraschallschwingung entspricht.

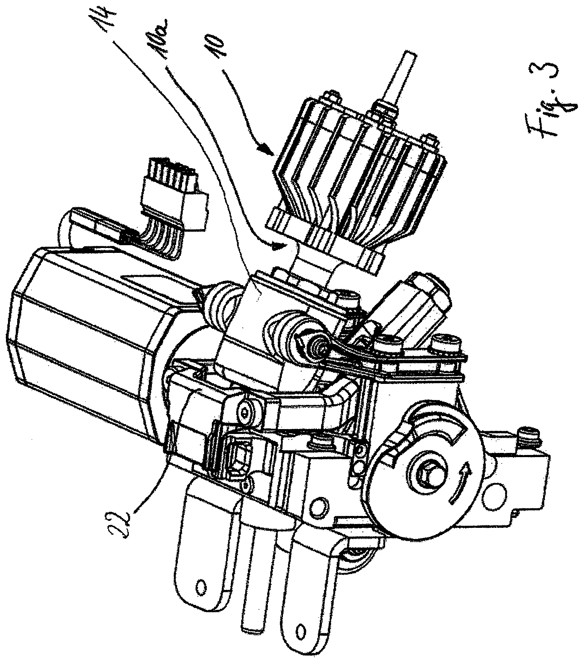

Wie insbesondere den Fig. 3, 7 und 8 entnommen werden kann, ist die mit der Sonotrode 11 und dem Ultraschallkonverter 10 versehene Sonotrodeneinrichtung 13 an einer Halterung 14 angeordnet, welche den Ultraschallkonverter 10, die Sonotrodeneinrichtung 13 und insbesondere deren Sonotrode 11, in einer oder mehreren bestimmten, insbesondere einer vorbestimmten, Position in Bezug auf den Bandverlauf hält, der für das Umreifungsband im Bereich der Sonotrodeneinrichtung vorgesehen ist. Die Sonotrode 11 sowie die durch die Schwingungsrichtung bestimmte Längsachse 12 der Sonotrodeneinrichtung 13 sind zumindest in einer Einsatzposition der Sonotrode gegenüber der der Sonotrode gegenüberliegenden Oberfläche des Bands geneigt, d.h. in einer von einer orthogonalen und von einer parallelen Anordnung abweichenden Ausrichtung. Im dargestellten bevorzugten Ausführungsbeispiel befindet sich die Längsachse 12 der Sonotrode 11 einerseits in einer Ebene, die senkrecht zur Bandlängsachse 15 ausgerichtet ist. Andererseits befindet sich die Längsachse 12 ausserhalb einer durch die sonotrodennahe Oberfläche des an dieser Stelle zweilagig angeordneten Bands gebildeten Ebene. Die Längsachse 12 der Sonotrode 11 befindet sich somit in einer zur Bandlängsachse 15 senkrecht ausgerichteten Ebene und schliesst mit der Ebene der Bandoberfläche einen Winkel α ein. In anderen Ausführungsformen kann die Längsachse 12 der Sonotrode auch ausserhalb der zur Bandoberfläche senkrecht ausgerichteten Ebene angeordnet sein. In solchen erfindungsgemässen Ausführungsformen weist die Längsachse 12 auch eine Neigung gegenüber der zur Bandoberfläche senkrechten Ebene auf. Der Winkel α beträgt im Ausführungsbeispiel ca. 30°. Vorzugsweise ist er aus einem Bereich von 10° bis 80° gewählt.

Zur Anlage gegen die sonotrodennahe Bandoberfläche kann die Sonotrode 11 in bestimmten Ausführungsformen mit einer ersten ebenen Kontaktfläche 21 versehen sein, die eine Rändelung oder Verzahnung aufweisen kann, um einen rutschsicheren Andruck der Kontaktfläche 21 mit der bzw. auf die Bandoberfläche zu gewährleisten. Die Rändelung oder Verzahnung kann unabhängig von der geometrischen Form der jeweiligen Kontaktfläche vorgesehen sein. Aufgrund der zuvor erörterten Neigung der Längsachse 12 der Sonotrodeneinrichtung, schliesst auch die Kontaktfläche 21 der Sonotrode mit der Längsachse 12 der Sonotrodeneinrichtung 13 einen Winkel α ein. Die Kontaktfläche 21 kann eine zumindest abschnittsweise im wesentlichen ebene Fläche sein, die während der Verschlussbildung zur flächigen und damit zumindest im wesentlichen parallelen Anlage gegen einen Abschnitt der Oberfläche der sonotrodennahen Bandlage des Umreifungsbands vorgesehen ist. Falls die jeweilige Kontaktfläche 21 auch andere als ebenflächige Abschnitte aufweist, so kann im Zusammenhang mit der vorliegenden Erfindung vorzugsweise der ebenflächige Abschnitt der Kontaktfläche zur Bestimmung des mit der Längsachse 12 eingeschlossen Winkels α herangezogen werden.

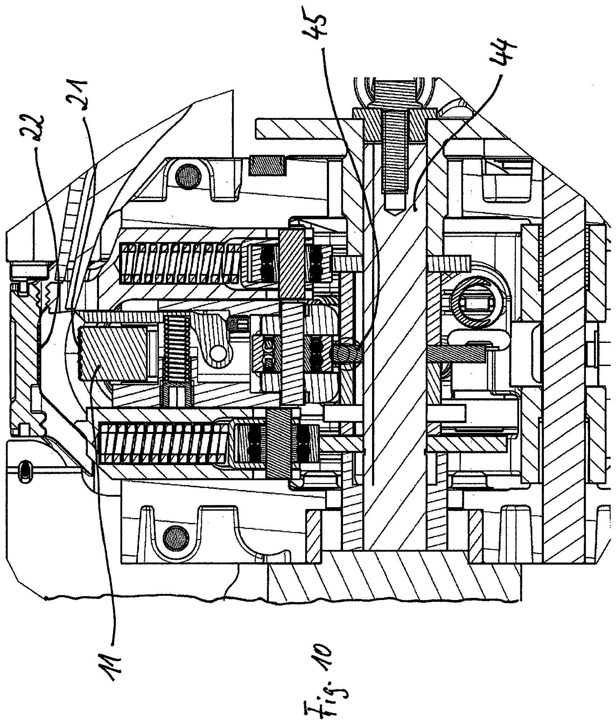

Die Sonotrode 11 kann hierbei insbesondere durch eine angetriebene Bewegung dem Band 16 zugeführt und gegen dieses gedrückt werden, so dass einerseits die Kontaktfläche 21 gegen die aussenliegende Oberfläche 17a der sonotrodennahen Bandlage 17 anliegt. Andererseits liegen damit auch die beiden innenliegenden Oberflächen 17b, 18b der beiden übereinander angeordneten Bandlagen 17, 18 gegeneinander an, sowie die sonotrodenferne Bandlage mit ihrer äusseren Oberfläche gegen einen Gegenhalter 22 der Sonotrodeneinrichtung an. Mit dieser angetriebenen Bewegung kann somit eine Überführung der Sonotrode von einer vorgegebenen Nicht-Einsatzposition zu einer ebenfalls vorgegebenen Einsatzposition der Sonotrode 11 führen. Durch eine ebenfalls angetriebe Bewegung in umgekehrter Richtung kann die Sonotrode nach Beendigung ihres Einsatzes zur Verschlussbildung vice versa wieder von der Einsatzposition in ihre nicht-Einsatzposition zurückgestellt werden. Wie in Fig. 10 zu erkennen ist, können die angetriebenen Bewegungen der Sonotrode 11 durch eine motorisch angetriebene Steuerungswelle 44 erzeugt werden, mit der im Ausführungsbeispiel auch Bewegungen anderer Komponenten der Umreifungsvorrichtung erzeugt werden. Auf der Steuerungswelle 44 ist eine Steuerungsscheibe 45 angeordnet, die mit einem Nocken der Sonotrodeneinrichtung in Kontakt ist und aufgrund der Kontur der Steuerungsscheibe 45 die Sonotrodeneinrichtung bewegt.

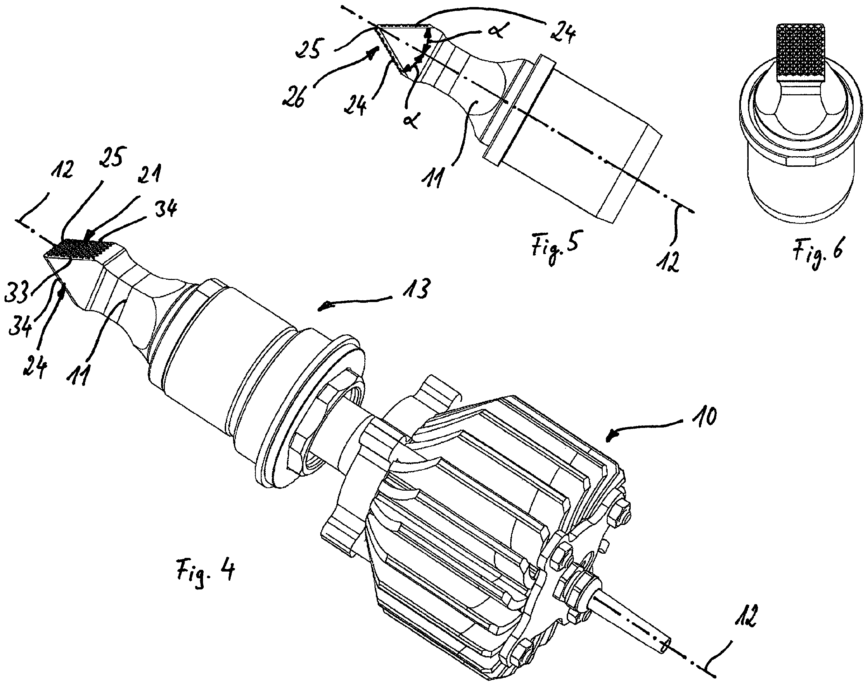

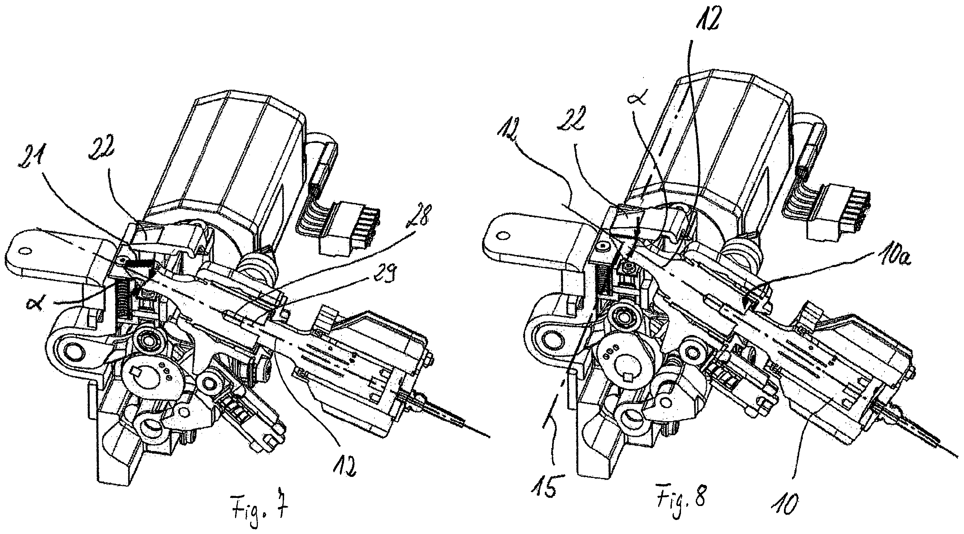

Im Bereich des freien Endes der in den Fig. 4 dargestellten Sonotrode 11, die lösbarer Bestandteil der Sonotrodeneinrichtung ist und in der Darstellung von Fig. 8 in einer Einsatzposition gezeigt ist, ist ausser der zuvor beschriebenen ersten Kontaktfläche 21, auch eine zweite Kontaktfläche 24 ausgebildet. Grundsätzlich ist es nicht zwingend erforderlich, dass die zweite oder weitere Kontaktflächen 24 in Bezug auf ihre geometrische Form und Grösse mit der ersten Kontaktfläche übereinstimmt. Im Ausführungsbeispiel der Figuren ist die zweite Kontaktfläche 24 jedoch in Bezug auf ihre Größe, der geometrschen Form sowie der vorhandenen Rändelung mit der ersten Kontaktfläche 21 identisch. Zudem ist die zweite Kontaktfläche 24 in Bezug auf die Längsachse 12 der Sonotrode 11 spiegelbildlich angeordnet. Hierdurch ergeben sich beim jeweiligen Einsatz der beiden Kontaktflächen 21, 24 der gleichen Sonotrode identische Einsatzbedingungen. Die eine der Kontaktflächen 21 ist somit auf der einen Seite der Längsachse 12 und die andere der Kontaktflächen 24 ist auf der anderen Seite der Längsachse 12 angeordnet. Die beiden unter dem betragsmässig gleichen Winkel α gegenüber der Längsachse 12 geneigten Kontaktflächen 21, 24 laufen in eine gemeinsame Längskante 25 zusammen. Das freie Ende 26 der Sonotrode hat somit im Bereich der beiden Kontaktflächen 21, 24 eine konische Form bzw. eine Keilform.

Die Sonotrode 11 ist am Ultraschallkonverter 10 auswechselbar und befestigbar gehalten und gelagert, beispielsweise mittels einer Schraubverbindung zwischen der Sonotrode 11 und dem Konverter 10. Die Lagerung ist derart vorgesehen, dass die Sonotrode 11 in zwei um 180° in Bezug auf die Längsachse 12 der Sonotrodeneinrichtung 13 und in Bezug auf die Halterung 14 gedrehte Positionen lösbar befestigt werden kann. Hierdurch kann jede der beiden Kontaktflächen 21, 24 in ihre Einsatzposition gebracht und angeordnet werden, in der die jeweilige Kontaktfläche 21, 24 für die Erzeugung eines Verschlusses vorgesehen und bei jeder Umreifungsbildung zum Einsatz kommt. Sobald die sich an der Sonotrodeneinrichtung in der Einsatzposition befindende erste Kontaktfläche 21 ausgetauscht werden soll, insbesondere aufgrund eines fortgeschrittenen Verschleisses der ersten Kontaktfläche 21, kann die Sonotrode 11 in einer um die Längsachse um 180° gedrehten Position, in Bezug auf die vorausgegangene Position und Ausrichtung und bezüglich der Halterung 14, angeordnet werden. In dieser relativen Position der Sonotrode 11 in Bezug auf die Halterung 14 befindet sich dann die zweite Kontaktfläche 24 in der gleichen Einsatzposition wie Kontaktfläche 21 zuvor und kann nun anstelle der ersten Kontaktfläche 21 zur Erzeugung von ultraschallgeschweissten Verschlüssen zwischen den Bandlagen verwendet werden. Jeweils nur eine der beiden Kontaktflächen 21, 24 befindet sich somit an der Sonotrodeneinrichtung in der Einsatzposition, wobei die Einsatzpositionen der beiden Kontaktflächen 21, 24 identisch sind.

Wie in der Längsschnittdarstellung der Fig. 7 und 8 dargestellt ist, weist die Sonotrode 11 im Bereich ihrer dem Ultraschallkonverter 10 gegenüberliegenden Stirnseite eine sacklochartige Ausnehmung 28 auf, die in Bezug auf die Sonotrodenlängsachse 12 symmetrisch angeordnet ist. Der Ultraschallkonverter 10 kann an seiner der Sonotrode 11 gegenüberliegenden Stirnseite 10a mit einem Zapfen 29 versehen sein, dessen Querschnitt derart kongruent zu Ausnehmung 28 der Sonotrode 11 ist, dass der Zapfen 29 passgenau und spielfrei in der Ausnehmung 28 aufgenommen werden kann. Eine lösbare Verbindung zwischen der Sonotrode 11 und dem Ultraschallkonverter 10 kann beispielsweise durch die bereits genannte Gewindeverbindung zwischen diesen beiden Elementen erzielt werden. Auch andere Verbindungsarten sind möglich.

In einer zur Gewindeverbindung zwischen der Sonotrode 11 und dem Ultraschallkonverter 10 alternativen Ausführungsform können die Querschnittsformen der Ausnehmung 28 und des Zapfens 29 hierbei derart gewählt sein, dass der Zapfen 29 nur in den zwei um 180° zueinander versetzten Positionen in der Ausnehmung 28 angeordnet werden kann. Mittels eines nicht näher dargestellten bajonettartigen Verschlusses können die Sonotrode 11 und der Ultraschallkonverter 10 miteinander lösbar befestigt werden, in der die Sonotrode 11 und der Ultraschallkonverter 10 insbesondere in Richtung der Längsachse 12 aneinander formschlüssg fixiert sind. In beiden relativen Positionen wird somit in gleicher Weise der Ultraschall und dessen Schwingung vom Ultraschallkonverter auf die Sonotrode und in dieser auf die jeweilige Kontaktfläche 21, 24 übertragen.

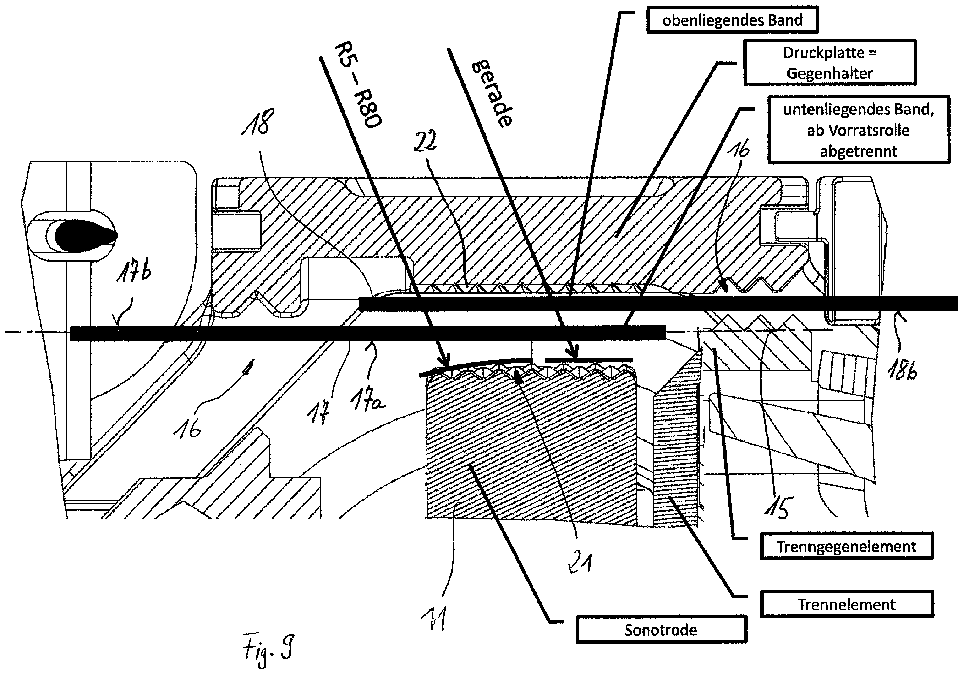

Zumindest eine, vorzugsweise jede, der Kontaktflächen 21, 24 kann in Bandverlaufsrichtung mit einer Krümmung 32 versehen sein, wie dies in Fig. 9 gezeigt ist. Die Krümmung 32 kann insbesondere derart vorgesehen sein, dass in Bandverlaufsrichtung gesehen, an zumindest einer der Aussenseite bzw. quer zur Bandverlaufsrichtung ausgerichteten Längskanten 33, 34 der Kontaktfläche 21, 24 der Abstand der sich in der Einsatzposition befindenden Kontaktfläche 21, 24 zum Umreifungsband grösser ist als entlang bzw. im Bereich der Mitte der Kontaktfläche. Vorzugsweise verläuft die Krümmung 32 - in Bandverlaufs- bzw. Bandlängsrichtung gesehen, über den gesamten Querschnitt der jeweiligen Kontaktfläche 21, 24, wobei die Kontaktfläche 21, 24 zumindest etwa im Bereich der Mitte, zwischen der in Bandverlaufsrichtung gesehenen vorderen und hinteren Längskante 33, 34 der jeweiligen Kontaktfläche 21, 24, den geringsten Abstand zu einer Gegenfläche des Gegenhalters 22 aufweist.

Im dargestellten bevorzugten Ausführungsbeispiel von Fig. 9 kann sich die Krümmung über einen Winkelbereich von 4° bis 20° erstrecken. Die Krümmung, die beispielsweise einen Radius aus einem Bereich von 5 mm bis 80 mm aufweisen kann, geht vorzugsweise stetig in einen ebenen Abschnitt der jeweiligen Kontaktfläche 21, 24 über. Dieser Übergang kann - in Bezug auf eine Richtung parallel zur Bandverlaufsrichtung gesehen - beispielsweise in etwa in der Mitte der Länge der Kontaktfläche 21, 24 liegen. Der ebene Abschnitt der Kontaktflächen 21, 24 kann hierbei dem Endbereich des Bandes der Bandlage gegenüberliegen, gegen den die Kontaktfläche 21, 24 bei einer Verschlusserzeugung anliegt. Der Abschnitt der Kontaktfläche 21, 24, der mit der Krümmung versehen ist, kann in Richtung auf das Bandende des unmittelbar gegenüberliegenden Bandabschnitts gesehen, vorzugsweise vor dem ebenen Abschnitt der Kontaktfläche angeordnet sein.

Hierdurch weist zumindest eine der Längskanten 33, 34, während des Einsatzes bei der Verschlussbildung den grössten Abstand zu einer Gegenfläche des Gegenhalters 22 auf. Durch diese Anordnung weist auch die genannte zumindest eine der stirnseitigen Längskanten 33, 34 während der Verschlussbildung bei Anlage unter einem vorgesehenen Druck gegen das Umreifungsband einen Abstand zur Oberfläche des Bands auf, während zumindest ein anderer Bereich der Kontaktfläche 21, 24, vorzugsweise zumindest ein Mittenbereich der Kontaktfläche 21, 24 und/oder ein sich an die Krümmung anschliessender ebener Flächenbereich der Kontaktfläche 21, 24, gegen die Oberfläche des Bands anliegt und damit einen Abstand Null aufweist. Hierdurch kann der Vorteil erzielt werden, dass ein sanfter Übergang zwischen Verschluss und Bandschlaufe erreicht wird, welcher zu einer höheren Belastbarkeit des Vershlusses führt.

In anderen Ausführungsformen kann die zumindest eine Kontaktfläche 21, 24 auch eine andere geometrische Formen aufweisen. Die Kontaktfläche kann beispielsweise eine andere Krümmungsform als einen Radius aufweisen, beispielsweise eine elliptische Form oder eine durch eine andere mathematische Funktion beschreibare Krümmung oder als Freiflächenform ausgebildet sein. Ebenso kann der Winkelbereich, über den sich die Krümmung oder ein Abschnitt der Krümmung der Kontaktfläche 21, 24 erstreckt, jeden realisierbaren Wert annehmen.

Die Umreifungsvorrichtung 1 weist zudem vorzugsweise eine Trenneinrichtung 37 auf, die automatisiert die Bandschlaufe von einer Bandrolle der Vorratseinrichtung 3 abtrennt. Die Trenneinrichtung 37 kann mit einer beweglichen, insbesondere schwenkbaren, Halterung 14 an der Verschlusseinrichtung 5 befestigt sein. Die Halterung 14 kann durch die für sie vorgesehenen Bewegungen die jeweils in der Einsatzpositon an der Sonotrodeneinrichtung angeordnete Kontaktfläche 21, 24 in die Verschlussbildungspostion sowie in die Ruheposition überführen. Ein Messer 38 oder ein anderes Trennelement kann an der Halterung 14 angeordnet sein und führt diese angetriebenen Bewegungen der Halterung mit aus. Zusätzlich kann das Trennelement mit einer weiteren angetriebenen Bewegung beaufschlagt werden, die das Trennelement relativ zur Halterung 14 der Sonotrodeneinrichtung ausführt, und die als Trennbewegung genutzt wird. Um mit einer möglichst geringen Anzahl an Bauteilen auszukommen, kann vorzugsweise der gleiche Antrieb und das gleiche Steuerungselement wie für den Träger der Sonotrodeneinrichtung genutzt werden. Im Ausführungsbeispiel kann das ein zentraler Antriebsmotor 40 sowie die gleiche Steuerungsscheibe 41 sein, die auf einer Steuerungswelle 42 angeordnet ist, auf der sich weitere Steuerungsscheiben befinden, mit denen weitere Komponenten der Umreifungsvorrichtung bewegt und deren Einsatzzeitpunkte bestimmt werden.

Das Trennelement wirkt beim Trennvorgang mit einem vorzugsweise zumindest während des Trennvorgangs fixen, also nicht beweglichen, Trenngegenelement zusammen, das ebenfalls vorzugsweise als Messer ausgebildet ist. Das Trennelement und das Trenngegenelement wirken in Art einer Schere zusammen und scheren das Band am Ende eines Umreifungsvorgangs nahe des Verschlusses in einem Bereich zwischen dem Verschluss und dem Bandvorrat ab. Durch die angetriebene Bewegung des Trennelements kann hierdurch trotz der Anordnung am Träger der Sonotrodeneinrichtung sowie trotz des gemeinsamen Steuerungsvorgangs der Bewegung des Trägers, der Zeitpunkt des Trennvorgangs relativ zum Zeitpunkt des Erreichens der Verschlussposition der Kontaktfläche variiert werden. Dies kann beispielsweise durch Variation der Länge des Wegs des Trennelements bis es zum Schervorgang kommt oder durch Variation einer möglichen Übersetzung der von der Steuerungsrolle auf das Trennelement übertragenen Bewegung erfolgen. Das Trennelement kann mittels eines Federelements zur Erzeugung einer Rückstellkraft belastet sein. Das Federelement kann durch die angetriebene Bewegung des Trennelements beim Trennvorgang gespannt werden, wobei eine Entlastung des Federelements nach erfolgtem Trennvorgang zu einer Rückstellbewegung des Trennelements in seine Ausgangsposition am Träger führen kann.

**Bezugszeichenliste**

| | | | |
|---|---|---|---|
| 1 | Umreifungsvorrichtung | 25 | Längskante |
| 3 | Vorratseinrichtung | 26 | freies Ende |
| 5 | Spann- und Verschlusseinrichtung | 28 | Ausnehmung |
| | | 29 | Zapfen |
| 6 | Bandführung | 32 | Krümmung |
| 8 | Gestell | 33 | Längskante |
| 9 | Ultraschallschweisseinrichtung | 34 | Längskante |
| 10 | Ultraschallkonverter | 37 | Trenneinrichtung |
| 10a | Stirnseite | 38 | Messer |
| 11 | Sonotrode | 40 | Motor |
| 12 | Längsachse | 41 | Steuerungsscheibe |
| 13 | Sonotrodeneinrichtung | 42 | Steuerungswelle |
| 14 | Halterung | 44 | Steuerungswelle |
| 15 | Bandlängsachse | 45 | Steuerungsscheibe |
| 16 | Band | | |
| 17 | sonotrodennahe Bandlage | α | Winkel |
| 17a | Oberfläche | | |
| 17b | innenliegende Oberfläche | | |
| 18 | Bandlage | | |
| 18b | innenliegende Oberfläche | | |
| 21 | Kontaktfläche | | |
| 22 | Gegenhalter | | |
| 24 | zweite Kontaktfläche | | |

## Patentansprüche

1. Umreifungsvorrichtung zur Umreifung von Packgut mit einem Umreifungsband, die
mit einer als Ultraschallschweisseinrichtung ausgebildeten Verbindungseinrichtung zur Bildung eines Verschlusses versehen ist, wobei die Ultraschallschweisseinrichtung mit einer Sonotrodeneinrichtung versehen ist, auf die durch einen Ultraschallkonverter erzeugter Ultraschall übertragbar ist und die Sonotrodeneinrichtung in einem vorgesehenen Kontaktbereich mit dem Umreifungsband eine Kontaktfläche aufweist, wobei die Kontaktfläche zur Anlage gegen eine Oberfläche des Umreifungsbands und die Sonotrodeneinrichtung zur Ausführung von Ultraschallschwingungen mit ihrer Kontaktfläche vorgesehen ist,
**gekennzeichnet,**
**durch** die Kontaktfläche (21, 24), bei der in Bezug auf eine vorgesehene Bandverlaufsrichtung des Umreifungsbands im Bereich der Sonotrodeneinrichtung (13) zumindest ein Randbereich der Kontaktfläche (21, 24) einen grösseren Abstand zum Umreifungsband aufweist als ein anderer Bereich der Kontaktfläche, der einen geringeren Abstand zur Mitte der Kontaktfläche aufweist als der Randbereich.

2. Umreifungsvorrichtung nach Anspruch 1, **dadurch gekennzeichnet, dass** die Kontaktfläche in Bezug auf die Bandverlaufsrichtung eine Krümmung aufweist.

3. Umreifungsvorrichtung nach zumindest einem der beiden vorhergehenden Ansprüche, **dadurch gekennzeichnet, dass** die Kontaktfläche (21, 24) der Sonotrode (11) bezüglich der vorgesehenen Schwingungsrichtung der Sonotrode (11) mit einem von einem rechten Winkel abweichenden Winkel α ausgerichtet ist.

4. Umreifungsvorrichtung nach Anspruch 3, **dadurch gekennzeichnet, dass** der von der Kontaktfläche (21, 24) und einer Längsachse (12) der Sonotrode (11) eingeschlossene Winkel α kleiner 90°, aber zumindest 5°, vorzugsweise zumindest 10° und besonders bevorzugt zumindest 15° beträgt.

5. Umreifungsvorrichtung nach einem der Ansprüche 3 oder 4, **dadurch gekennzeichnet, dass** der Winkel α kleiner oder gleich 80° vorzugsweise kleiner oder gleich 70° beträgt.

6. Umreifungsvorrichtung nach einem der Ansprüche 3-5, **dadurch gekennzeichnet, dass** der Winkel α zumindest ungefähr 30° beträgt.

7. Umreifungsvorrichtung nach zumindest einem der vorhergehenden Ansprüche, **dadurch gekennzeichnet, dass** die Sonotrode (11) mit zumindest zwei Kontaktflächen (21, 24) versehen ist, die abwechselnd in eine Benutzungslage bringbar sind, in der unter Einsatz der jeweils in der Benutzungslage befindlichen Kontaktfläche durch die Umreifungsvorrichtung ein Verschluss bildbar ist.

8. Umreifungsvorrichtung nach Anspruch 7, **dadurch gekennzeichnet, dass** die beiden Kontaktflächen (21, 24) bezüglich einer parallel zur Längsachse (12) verlaufenden Ebene symmetrisch ausgerichtet sind.

9. Umreifungsvorrichtung nach zumindest einem der vorhergehenden Ansprüche, **gekennzeichnet durch** eine Trenneinrichtung, von der zumindest ein Trennelement zumindest während eines Trennvorgangs ortsfest angeordnet ist.

10. Umreifungsvorrichtung nach Anspruch 9, **dadurch gekennzeichnet, dass** das Trennelement sowohl gemeinsam mit der Sonotrode als auch relativ zur Sonotrode beweglich angeordnet ist.

11. Verfahren zur Umreifung von Packgut mit einem Umreifungsband unter Verwendung einer Umreifungsvorrichtung nach einem der Ansprüche 1-10, wobei zwei Bandlagen des Umreifungsbands in einer Verbindungseinrichtung der Umreifungsvorrichtung angeordnet werden und mit der Verbindungseinrichtung als Verschluss eine Schweissverbindung zwischen den beiden Bandlagen erzeugt wird.

## Claims

1. Strapping apparatus for strapping packaged articles with a strapping band, said strapping apparatus being provided with a connecting device, which is designed as an ultrasonic welding device, for forming a closure, wherein the ultrasonic welding device is provided with a sonotrode device to which ultrasound generated by an ultrasound converter can be transmitted, and the sonotrode device has a contact surface in a designated contact region with the strapping band, wherein the contact surface is provided for butting against a surface of the strapping band, and the sonotrode device is provided for carrying out ultrasonic vibrations with its contact surface, **characterized by** the contact surface (21, 24), at which, with respect to a designated band running direction of the strapping band in the region of the sonotrode device (13), at least one edge region of the contact surface (21, 24) has a greater distance from the strapping band than another region of the contact surface that has a smaller distance from the center of the contact surface than the edge region.

2. Strapping apparatus according to Claim 1, **characterized in that** the contact surface has a curvature with respect to the band running direction.

3. Strapping apparatus according to at least one of the two preceding claims, **characterized in that** the contact surface (21, 24) of the sonotrode (11) is oriented with an angle α differing from a right angle with respect to the designated vibration direction of the sonotrode (11).

4. Strapping apparatus according to Claim 3, **characterized in that** the angle α enclosed by the contact surface (21, 24) and a longitudinal axis (12) of the sonotrode (11) is smaller than 90°, but is at least 5°, preferably at least 10° and particularly preferably at least 15°.

5. Strapping apparatus according to either of Claims 3 and 4, **characterized in that** the angle α is smaller than or equal to 80°, preferably smaller than or equal to 70°.

6. Strapping apparatus according to one of Claims 3-5, **characterized in that** the angle α is at least approximately 30°.

7. Strapping apparatus according to at least one of the preceding claims, **characterized in that** the sonotrode (11) is provided with at least two contact surfaces (21, 24) which can be brought in an alternating manner into a use position in which a closure can be formed by the strapping apparatus using the contact surface located in each case in the use position.

8. Strapping apparatus according to Claim 7, **characterized in that** the two contact surfaces (21, 24) are oriented symmetrically with respect to a plane running parallel to the longitudinal axis (12).

9. Strapping apparatus according to at least one of the preceding claims, **characterized by** a separating device, of which at least one separating element is arranged in a fixed position at least during a separating operation.

10. Strapping apparatus according to Claim 9, **characterized in that** the separating element is arranged movably both together with the sonotrode and also relative to the sonotrode.

11. Method for strapping packaged articles with a strapping band using a strapping apparatus according to one of Claims 1-10, wherein two band layers of the strapping band are arranged in a connecting device of the strapping apparatus and, with the connecting device as a closure, a welded connection is produced between the two band layers.

## Revendications

1. Dispositif de cerclage destiné à cercler des marchandises emballées avec une bande de cerclage, lequel dispositif de cerclage est muni d'une unité de liaison conçue comme une unité de soudage par ultrasons et destinée à former une fermeture, l'unité de soudage par ultrasons étant munie d'une unité formant sonotrode à laquelle des ultrasons générés par un convertisseur d'ultrasons peuvent être transmis et l'unité formant sonotrode comportant une surface de contact dans une zone de contact prévue avec la bande de cerclage, la surface de contact étant prévue pour venir en appui contre une surface de la bande de cerclage et l'unité formant sonotrode étant prévue pour produire des vibrations ultrasonores avec sa surface de contact, **caractérisé par**
la surface de contact (21, 24) dans laquelle, par rapport à une direction de défilement prévue de la bande de cerclage dans la zone de l'unité formant sonotrode (13), au moins une zone de bord de la surface de contact (21, 24) est à une plus grande distance de la bande de cerclage qu'une autre zone de la surface de contact qui est à une plus faible distance du centre de la surface de contact que la zone de bord.

2. Dispositif de cerclage selon la revendication 1, **caractérisé en ce que** la surface de contact présente une incurvation par rapport à la direction de défilement de la bande de cerclage.

3. Dispositif de cerclage selon l'une au moins des deux revendications précédentes, **caractérisé en ce que** la surface de contact (21, 24) de la sonotrode (11) est orientée avec un angle α, différent d'un angle droit, par rapport à la direction de vibration prévue de la sonotrode (11).

4. Dispositif de cerclage selon la revendication 3, **caractérisé en ce que** l'angle α, formé par la surface de contact (21, 24) et un axe longitudinal (12) de la sonotrode (11), est inférieur à 90°, mais égal à au moins 5°, de préférence au moins 10° et de manière particulièrement préférée au moins 15°.

5. Dispositif de cerclage selon l'une des revendications 3 ou 4, **caractérisé en ce que** l'angle α est inférieur ou égal à 80°, de préférence inférieur ou égal à 70°.

6. Dispositif de cerclage selon l'une des revendications 3 à 5, **caractérisé en ce que** l'angle α est d'au moins environ 30°.

7. Dispositif de cerclage selon l'une au moins des revendications précédentes, **caractérisé en ce que** la sonotrode (11) est pourvue d'au moins deux surfaces de contact (21, 24) qui peuvent être amenées alternativement dans une position d'utilisation dans laquelle une fermeture peut être formée par le dispositif de cerclage à l'aide de la surface de contact située à chaque fois dans la position d'utilisation.

8. Dispositif de cerclage selon la revendication 7, **caractérisé en ce que** les deux surfaces de contact (21, 24) sont orientées symétriquement par rapport à un plan parallèle à l'axe longitudinal (12).

9. Dispositif de cerclage selon l'une au moins des revendications précédentes, **caractérisé par** une unité de séparation dont au moins un élément de séparation est disposé de manière fixe au moins pendant un processus de séparation.

10. Dispositif de cerclage selon la revendication 9, **caractérisé en ce que** l'élément de séparation est disposé de manière mobile aussi bien conjointement avec la sonotrode que par rapport à la sonotrode.

11. Procédé de cerclage de marchandises emballées avec une bande de cerclage à l'aide d'un dispositif de cerclage selon l'une des revendications 1 à 10, deux couches de la sangle de cerclage étant disposées dans une unité de liaison du dispositif de cerclage et une liaison soudée entre les deux couches de bande de cerclage étant réalisée sous la forme d'une fermeture avec l'unité de liaison.
